# EUROPEAN PATENT SPECIFICATION

(11) **EP 1 905 486 B1**
(45) Date of publication and mention of the grant of the patent: **01.05.2013**
(21) Application number: 07018691.1
(22) Date of filing: 24.09.2007
(51) Int. Cl.: G09B 19/00, A62C 99/00

(54) **Fire simulator for use during trainings within the framework of fire fighting**
Brandsimulator zum Trainungsgebrauch im Rahmen der Feuerbekämpfung
Simulateur d'incendie destiné à être utilisé dans le cadre d'entraînement de lutte contre l'incendie

(30) Priority: 26.09.2006 NL 1032571
(43) Date of publication of application: 02.04.2008
(60) Divisional application: 10013928.6
(73) Proprietor: TCD Consultants B.V., 5111 ND BAARLE-NASSAU (NL)
(72) Inventor: Haagen, Jacobus Waltherus Maria, 5111 NB Baarle-Nassau (NL); Jansen, Franciscus Josephus Anna, 2381 Weelde (BE); Severijns, Constantinus Adrianus Marie, 5111 XW Baarle-Nassau (NL)
(74) Representative: Dekker-Garms, Alwine Emilie

(56) References cited:
- EP-A1- 0 561 534
- DE-U1- 9 309 408
- DE-U1- 20 018 073
- GB-A- 2 339 955
- US-A- 5 888 072

## Description

The invention relates to a fire simulator for use during trainings within the framework of fire fighting.

Such a fire simulator is known in practice, and serves for providing fire with the objective of approximating a real fire as well as possible. Usually, the fire simulator is disposed in a training room, wherein a device for monitoring and controlling the fire and a number of environment variables is also provided.

In many cases, a gas-fired fire simulator is utilized for controlling the fire and the heat emission, and for guaranteeing a relatively clean combustion, so that emissions are as low as possible, and the fire produces as little as possible trouble for the direct environment. In such a case, combustion products are discharged directly to the open air. Often, forced mechanical ventilation takes place in the process, for the purpose of controlling the temperature in the training room as well.

Advantages of the application of a gas-fired fire simulator reside in a good controllability, fast and continuous usability, and a relatively limited burdening of the environment. However, a limitation of such an application is that a fire of solid substances is not being imitated in a completely realistic fashion. In stead, it always remains a gas fire or an imitation of a fire of liquid, wherein the way in which heat emission and smoke production take place and the behaviour at extinguishing are different than in the case of a real solid substances fire.

In order to effect a realistic simulation of a solid substances fire, a wood-fired fire simulator is utilized in practice. In such a fire simulator, solid substances like wood blocks or pallets are lit and burnt, by means of which a realistic fire is obtained, so that a training in which the fire simulator is applied provides an actual experience of the conditions of common practical situations in fire fighting (see f.i. EP 0 561 534).

However, the application of a wood-fired fire simulator has a number of important disadvantages. For example, it takes a relatively long time before the solid substance is burning well, and the controllability of the fire is limited. Also, a lot of smoke is often released with combustion products. Besides damage to the environment, this also produces direct hinder, as a result of which this gives limitations in respect of the location where such a fire simulator may be placed.

It is an objective of the invention to provide a fire simulator, which is suitable to be applied to make a fire in a controllable way, and with which it is also possible to imitate a solid substances fire in an utmost realistic way, so that during a training in which the fire simulator according to the invention is applied, the reality of a solid substances fire is approximated as well as possible. This objective is achieved by a fire simulator, comprising a basket which is destined for accommodating a combustible solid substance, and a burner which is positioned underneath the basket.

By applying the fire simulator according to the invention, it is possible to burn wood or another suitable solid substance, and in doing so, to imitate a solid substances fire in a realistic way. The fire simulator has a basket for accommodating the solid substance, whereas a burner positioned underneath the basket is used to be capable of quickly lighting the solid substance. In case the solid substance is wet with fire extinguishing water, the solid substance is first dried out under influence of the burner.

In application of the assembly of the basket and the burner, the fire is better controllable than in application of a wood-fired fire simulator. Compared to the fire which is realized with a gas-fired fire simulator, the fire which is realized with the fire simulator according to the invention approximates a solid substances fire much better, because solid substance is actually burnt.

Very advantageously, the applied basket has an integrated fire extinguishing system, which serves for transporting fire extinguishing agent such as water, and which comprises openings for letting out the fire extinguishing agent in the basket, so that the fire is even better controllable. When the fire gets too hot, for example, or when a calamity occurs, it is possible to directly take action with such a fire extinguishing system. In a practical embodiment of the basket, the fire extinguishing system is part of a frame of the basket, which, in such a case, may have a number of hollow tubes which are provided with openings along their length. In order to guarantee an effective fire extinguishing process, it is preferred when the fire extinguishing system also comprises a pipe which is located at a substantially central position in the basket, and which has openings for letting out fire extinguishing agent, at least at a top side.

In a preferred embodiment, the basket is provided with a compartmentalization to complicate the fire extinguishing process, and thereby enhance the educational effect which is obtained by applying the fire simulator according to the invention.

For example, the basket may be shaped like a bin having an open top side, and a square or rectangular circumference, which is provided with a number of uprights, wherein the bottom of the bin is located at a certain distance from the ground. Preferably, both the bottom and the upright wall of the basket are provided with a grid, so that the flames of the burner are allowed to reach the solid substance in the basket well, the supply of oxygen does not only take place from the open top side during the fire, and the fire may be extinguished from various sides.

Preferably, the burner comprises a water-filled tray known per se, in which a combustible gas is led. When such a tray is applied, an excellently controllable gas fire may be obtained, over the entire surface of the tray.

For the purpose of lighting the burner, a separate lighting burner may be applied. By using a suitable control, it is guaranteed that a fuel supply to the burner only takes place when the lighting burner has a flame. In this way, it is prevented that fuel is released unwantedly, and danger of explosion is reduced to a minimum.

The invention also relates to a training unit for use during trainings within the framework of firefighting, comprising a training room accessible to at least one person, wherein the fire simulator having the basket is arranged inside this room.

In a practical embodiment, the training room is sufficiently large to allow for a realistic exercise. Also, insulation is applied to walls and ceiling of the training room in order to withstand the high temperatures which are occurring. The training room is provided with at least one entrance door and a possibility for supplying fresh air, whether or not closeable. Besides, the training room is provided with an exhaust for flue gases. Preferably, the training room comprises a lowered ceiling which is located above the fire simulator, wherein the flue gas exhaust duct is located above this lowered ceiling. In this way, it is achieved that the flue gases are capable of spreading in the training room, prior to being exhausted. In that situation, a so-called smoke blanket is obtained against the lowered ceiling. This is advantageous, because the smoke development and the spread of smoke in the training room are essential for a good training. .

The flue gas exhaust duct is manufactured from a heat-resistant material, wherein the dimension of the duct, in particular the dimension of a cross-section of the duct, is determined in dependence on a desired exhaust capacity. In an advantageous embodiment of the training unit according to the invention, a ventilator is arranged in the flue gas exhaust channel, so that forces flue gas exhaust may take place, and an after-burner for purifying exhausted flue gases is arranged in the duct, so that only purified flue gases are eventually blown out in the open air. In this way, it is achieved that the fire simulation takes place in a way which is sensible in view of the environment.

Preferably, the training unit according to the invention comprises a central control, which, among other things, takes care of control of the temperature prevailing in the training room by ventilation control, automatic fire extinguishing in exceeding of a determined maximum temperature, activating of the after-burner and release of the training unit after a check whether all requirements are met.

Within the framework of the invention, it is possible that the training unit is realized as a mobile unit, which may be built in a suitable means of transport such as a container or trailer.

The present invention also relates to a training unit for use during trainings within the framework of firefighting, comprising:
- a training room accessible to at least one person;
- a fire simulator arranged in the training room;
- a duct for removing from the training room flue gases which are produced when the fire simulator lets a fire take place during operation of the training unit; and
- an after-burner for purifying exhausted flue gases.

The application of an after-burner for purifying flue gases is known per se, wherein an important advantage of such an application resides in the fact that the extent to which the environment is burdened by flue gases, i.e. the extent to which the environment is polluted by flue gases is drastically reduced. The invention now provides measures to also reduce burdening of the environment involved in trainings in the framework of fire fighting such as fire drills in which fire simulation takes place.

In a practical embodiment of the training unit having the fire simulator and the after-burner, the after-burner is located in the duct which serves to remove flue gases from the training room. In this way, it is ensured that all flue gases may be treated by the after-burner. Preferably, means are provided for forced exhausting of flue gases out of the training room, so that an effective operation of the after-burner may be guaranteed.

The invention will be further explained on the basis of the following description of the invention with reference to the drawing, in which:
figure 1 diagrammatically shows a training unit according to the invention; and
figure 2 shows a perspective view of a fire simulator which is part of the training unit according to the invention shown in figure 1.

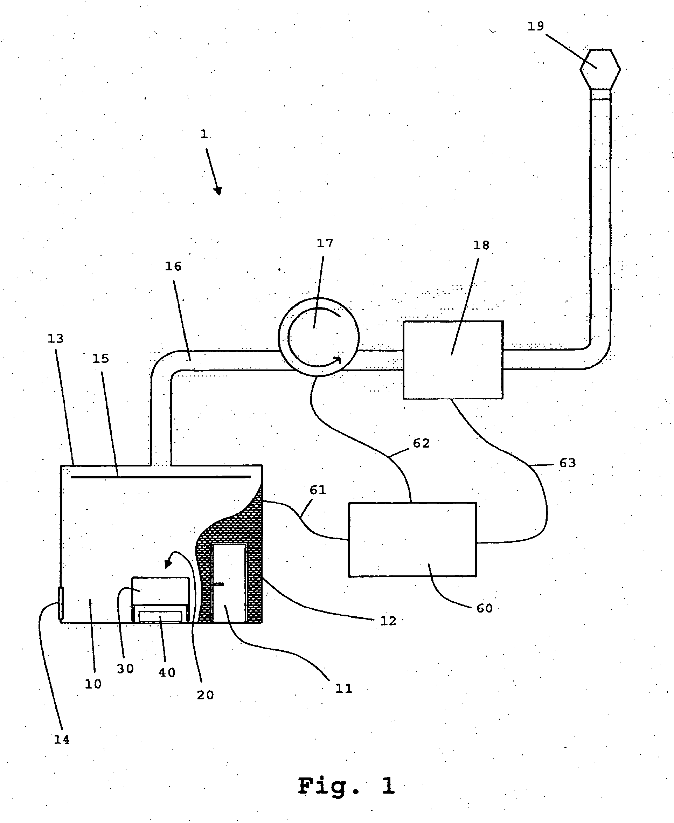

Figure 1 diagrammatically shows a training unit 1 according to the invention. The training unit 1 is intended to be used for the purpose of trainings which are held within the framework of fire fighting.

The training unit 1 comprises a training room 10 in which a fire simulator 20 is arranged, and which is so large that at least one participant of a fire fighting training is allowed to move around at least a portion of the fire simulator 20, so that it is possible to have a realistic exercise. In the shown example, the training room 10 is accessible through a door 11. Upright walls 12 of the training room 10 are covered with, or manufactured from heat-resistant material. The ceiling 13 of the training room 10 is preferably insulated, wherein heat-resistant material is applied underneath the insulation. In a wall 12 of the training room 10, a controllable air grate 14 is located to supply more or less air to the training room 10. Furthermore, the training room 10 is provided with a drain (not shown) for fire extinguishing water.

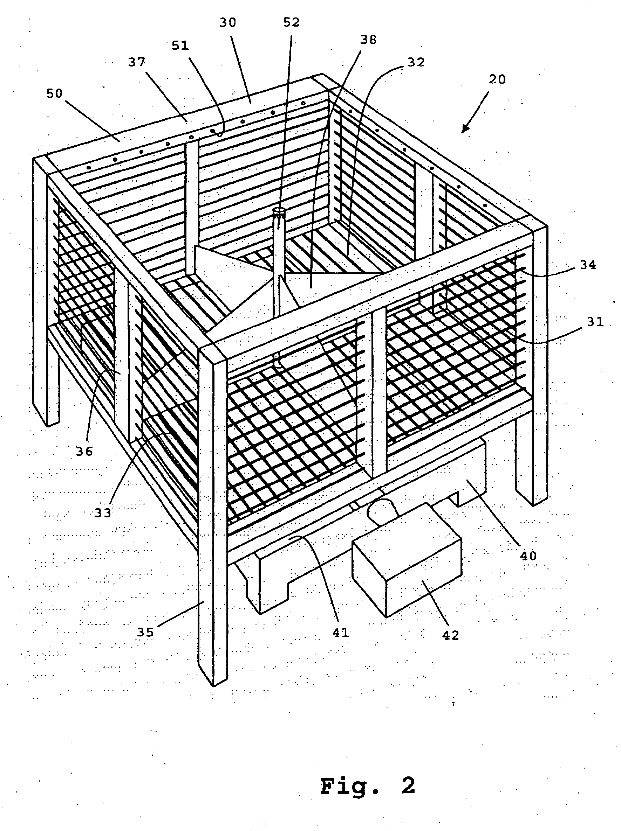

The fire simulator 20 serves to imitate a fire in the training room 10, wherein fire is actually made, which needs to be extinguishing by a participant of the training. The fire simulator 20 is shown in detail in figure 2. In particular, the fire simulator 20 comprises a basket 30 and a main burner 40. The basket 30 is preferably manufactured from steel, and has an open top side and a square circumference, wherein, grids 33 having a number of parallel grid bars 34 are arranged in each of the walls 31 and the bottom 32 of the basket 30. Within the framework of the invention, it is not necessary that the basket 30 is provided with grids 33, but in view of things like the supply of oxygen to a fire in the basket 30 and the possibility of extinguishing the fire from various sides, this is advantageous. When the basket 30 comprises grids 33, these may be realized in any suitable way, wherein it is not necessary that the grids 33 are having parallel grid bars 34. It is also not necessary that all walls 31 of the basket 30 are provided with grids 33.

The basket 30 rests on the ground through four uprights 35, wherein the bottom 32 of the basket 30 is located at a certain distance above the ground. The main burner 40 is positioned underneath the bottom 32 of the basket 30. Preferably, the main burner 40 comprises a water-filled tray 41 in which a combustible gas is led, as shown. Such a tray 41 is known per se, and when the combustible gas is supplied and lit, a gas fire is realized in the tray 41, on the water. The gas that is used in the main burner 40 may be fluid or gaseous propane, LPG, or another suitable combustible gas.

Within the framework of the invention, the main burner 40 may comprise any suitable type of burner, and the main burner 40 can be fired on the basis of any suitable type of fuel. Examples of suitable fuel are petrol, special boiling point spirit, domestic fuel oil, and kerosene.

For the purpose of lighting the main burner 40, a pilot burner 42 is provided, which is realized as a unit having a burner, electric firing and ionization flame monitoring, for example. Furthermore, the pilot burner 42 has its own ventilator for the necessary supply of air. In view of the safety, it is preferred when a control of the fuel supply to the main burner 40 is provided, wherein this control is aimed at only allowing the supply of fuel to the main burner 40 when the pilot burner 42 has a flame.

According to a special aspect of the invention, the basket 30 has an integrated fire extinguishing system 50. In the shown example, bars which are part of a frame 36 of the basket 30, including the uprights 35, are realized as hollow tubes. As a result, a system 50 is obtained, which may be flowed through by fire extinguishing water. In frame bars 37 which are located at the top side of the basket 30, spray openings 51 are arranged, so that fire extinguishing water may be sprayed in the basket 30 when the fire extinguishing system 50 is activated and fire extinguishing water is supplied to the fire extinguishing system 50. The fire extinguishing system 50 also comprises a hollow pipe 52 which is located in the centre of the basket 30, and which has spray openings 51 at a top side. By having the application of the pipe 52, it is achieved that during a fire extinguishing action, fire extinguishing water is not only sprayed from a circumference of the basket 30 to the centre, but that fire extinguishing water is also supplied from the centre of the basket 30.

The fire simulator 20 is particularly suitable for simulating a solid substances fire. When the basket 30 is used to this end, the basket 30 is filled with a suitable combustible solid substance, for example, wood. The basket 30 may even be applied for burning poisonous substances, for example, impregnated wood. With the help of the main burner 40, the combustible substance which is located inside the basket 30, may be lit quickly. When a fire extinguishing action has taken place, the main burner 40 can also be applied to dry the combustible substance.

If desired or necessary, the fire extinguishing system 50 may be used to extinguish a fire in the basket 30. It is advantageous when the supply of water to the fire extinguishing system 50 can be remotely controlled, so that in dangerous situations in which the basket 30 can not be approached, for example when the fire in the basket 30 gets too big or too hot, the fire extinguishing system 50 still may be activated. If so desired, fire extinguishing detection means may be added to the basket 30, which serve to detect if one or more parameters of a fire get outside of allowable limits, whereby it becomes possible to control fires in the basket 30 by automatically activating the fire extinguishing system 50.

On the basis of the presence of the fire extinguishing system 50, the safety of the application of the fire simulator 20 according to the invention is enhanced. By incorporating the fire extinguishing system 50 in the frame 36 of the basket 30, it is achieved that the fire extinguishing system 50 is practically invisible and is not in the way, so that hinder to fires in the basket 30 and fire extinguishing actions from the outside does not occur. Moreover, in this way, a very robust realization of the fire extinguishing system 50 is obtained.

Preferably, a number of partitions 38 as shown in figure 2 are placed at the bottom 32 of the basket 30, so that the basket 30 is more or less divided in a number of compartments. In the shown example, the basket 30 is provided with four partitions 38, which does not alter the fact that the number of partitions 38 may also be more or less within the framework of the invention. In figure 2, it can be seen that the partitions 38 are less high than the walls 31 of the basket 30. By the presence of the partitions 38, a fire extinguishing action is complicated, as a result of which the training of persons performing the fire extinguishing action gets more effective.

As shown in figure 1, the training room 10 has a lowered ceiling 15, and the fire simulator 20 is arranged underneath it. The lowered ceiling 15 has a steel constructing with steel sheets, so that it is suitable for accumulating heat. Preferably, the ceiling 15 does not contact the walls 12 of the training room 10.

By the application of the false ceiling 15, it is possible to remove flue gases in an indirect way. For the purpose of the flue gas removal, a flue gas exhaust duct 16 and a ventilator 17 are provided, wherein an entrance of the flue gas exhaust duct 16 is located above the lowered ceiling 15. When the ventilator 17 is activated, the flue gas removal takes place in a forced way. . Preferably, the ventilator 17 is controllable, so that the extent of removal can be adapted to actual circumstances in the training room 10.

In the flue gas exhaust duct 16, an after-burner 18 is also arranged, which serves for purifying the flue gases. The after-burner 18 may have its own control, and may function in a thermal, catalytic or other way.

An exit of the flue gas exhaust duct 16 is provided with a deflector cap 19. At the position of the deflector cap 19, purified flue gases are blown into the open air. The deflector cap 19 is preferably located at a large height, because the gases may be hot, and it is prevented in this way that people may get in contact with these gases.

The training unit 1 has a central control 60, which is diagrammatically depicted in figure 1 as a block, wherein a communication line 61 between the central control 60 and the training room 10 is depicted as well, in general. Furthermore, a communication line 62 between the central control 60 and the ventilator 17, and a communication line 63 between the central control 60 and the after-burner 18 are depicted. Through the first communication line 62, the central control 60 may control the operation of the ventilator 17 on the basis of detected temperature and pressure in the training room 10, for example, whereas the central control 60 is coupled to the control of the after-burner 18 through the second communication line 63.

Within the framework of the invention, the central control 60 may have various functions. Preferably, temperature readers (not shown) are arranged at various places in the training room. On the basis of input of these temperature readers, the central control 60 is capable of monitoring the room temperature, and of possibly starting a fire extinguishing action in order to guarantee the safety in the training room 10. Further, the central control 60 may be used for performing functions like checking various conditions of the training unit 1 and indicating whether the training unit 1 is ready for being used, checking the operation of the main burner 40 and the pilot burner 42, and activating the fire extinguishing system 50 of the basket 30 in the case of exceeding of a maximum allowable temperature. Further, for safety reasons, it is advantageous when the central control 60 comprises a emergency stop provision, which is adapted to shut off the main burner 40 in emergency cases, and to bring the ventilation in the training room 10 to a maximum level by controlling the operation of the air grate 14 and the ventilator 17.

It will be clear to a person skilled in the art that the scope of the invention is not limited to the examples discussed above, but that several amendments and modifications thereof are possible without deviating from the scope of the invention as defined in the appended claims.

Within the framework of the invention, the basket 30 may have another shape than is shown in figure 2 and is described on the basis of that figure. For example, it is not necessary that the basket 30 has a square circumference. When having another shape, the basket 30 may as well be capable of accommodating its combustible solid substance. In view thereof, the shape of the circumference of the basket 30 may for example also be rectangular, round, triangular or multi-angular. When the basket 30 is provided with uprights 35, it is not necessary that the number thereof is four; the number of uprights 35 may also be three, five or more, for example.

For sake of completeness, it is noted that the invention provides primarily a fire simulator 20 having an assembly of a basket 30 and a burner 40 positioned underneath the basket 30, wherein the basket 30 is suitable for accommodating a combustible solid substance, so that a fire to be imitated may take place inside the basket 30. An embodiment of the fire simulator 20 in which the basket 30 has an integrated fire extinguishing system 50 is an important embodiment, because this one is very safe. An option of the application of partitions 38 in the basket 30 has the advantage of an enhanced training effect, because as a result of this, extinguishing a fire in the basket 30 is complicated.

As may be concluded from the foregoing, it has advantages when a fire simulator 20 having a basket 30 which is provided with an integrated fire extinguishing system 50 also comprises a burner 40 positioned underneath the basket 30. That does not alter the fact that a basket 30 having an integrated fire extinguishing system 50 may also be applied independent of a burner 40. The same is true for a basket 30 which is divided in compartments by upright partitions 38.

The invention also provides a training unit 1 having a training room 10, a fire simulator 20 arranged in the training room 10, a flue gas exhaust duct 16, and an after-burner 18 for purifying flue gases which are released when a fire is simulated with the fire simulator 20 during a training. The advantageous application of the after-burner 18 is independent of the type of fire simulator 20, and in itself yields the advantage of a reduction of environmental pollution.

## Claims

1. Fire simulator (20) for use during trainings within the framework of fire fighting, **characterized by** a basket (30) which is destined for accommodating a combustible solid substance, and a burner (40) which is positioned underneath the basket (30), wherein the basket (30) comprises an integrated fire extinguishing system (50) for transporting fire extinguishing agent, wherein the fire extinguishing system (50) comprises openings (51) for letting out fire extinguishing agent in the basket (30).

2. Fire simulator (20) according to claim 1, wherein the fire extinguishing system (50) is accommodated in a frame (36) of the basket (30).

3. Fire simulator (20) according to claim 2, wherein the frame (36) of the basket (30) comprises a number of hollow tubes (37) which are provided with openings (51) along their length.

4. Fire simulator (20) according to any of claims 1-3, wherein the fire extinguishing system (50) comprises a pipe (52) which is located at a substantially central portion in the basket (30), and which has openings (51) for letting out fire extinguishing agent, at least at a top side.

5. Fire simulator (20) according to any of claims 1-4, wherein the basket (30) is divided in compartments by means of partitions (38).

6. Training unit (1) for use during trainings within the framework of fire fighting, comprising a training room (10) accessible to at least one person, having disposed therein a fire simulator (20) according to any of claims 1-5.

7. Training unit (1) according to claim 6, further comprising a duct (16) for removing from the training room (10) flue gases which are produced when the fire simulator (20) lets a fire take place during operation of the training unit (1).

8. Training unit (1) according to claim 7, further comprising a lowered ceiling (15) which is located above the fire simulator (20), wherein the flue gas exhaust duct (16) is located above this lowered ceiling (15).

9. Training unit (1) according to claim 7 or 8, further comprising an after-burner (18) for purifying exhausted flue gases, which is located in the flue gas exhaust duct (16).

10. Training unit (1) according to any of claims 6-9, further comprising means (17) for the forced removal of flue gases from the training room (10).

11. Training unit (1) according to any of claims 6-10, which is realized as a mobile unit, and which may be built in a suitable means of transport.

## Patentansprüche

1. Brandsimulator (20) zur Verwendung bei Übungen im Rahmen der Brandbekämpfung, **gekennzeichnet durch** einen Korb (30), der dazu bestimmt ist, eine brennbare feste Substanz aufzunehmen, und einen Brenner (40), der unter dem Korb (30) angeordnet ist, wobei der Korb (30) ein integriertes Feuerlöschsystem (50) zum Transportieren von Feuerlöschmittel aufweist, wobei das Feuerlöschsystem (50) Öffnungen (51) aufweist, um Feuerlöschmittel in den Korb auszugeben.

2. Brandsimulator (20) nach Anspruch 1, wobei das Feuerlöschsystem (50) in einem Rahmen (36) des Korbs (30) untergebracht ist.

3. Brandsimulator (20) nach Anspruch 2, wobei der Rahmen (36) des Korbs (30) eine Anzahl von Hohlröhren (37) aufweist, die entlang ihrer Länge mit Öffnungen (51) versehen sind.

4. Brandsimulator (20) nach einem der Ansprüche 1 bis 3, wobei das Feuerlöschsystem (50) ein Rohr (52) aufweist, das sich an einem im Wesentlichen zentralen Abschnitt im Korb (30) befindet, und das wenigstens an der Oberseite Öffnungen (51) hat, um Feuerlöschmittel auszugeben.

5. Brandsimulator (20) nach einem der Ansprüche 1 bis 4, wobei der Korb (30) mittels Trennwänden (38) in Kammern aufgeteilt ist.

6. Übungseinheit (1) zur Verwendung bei Übungen im Rahmen von Brandbekämpfung, mit einem Übungsraum (10), der für wenigstens eine Person zugänglich ist, und in dem sich ein Brandsimulator (20) nach einem der Ansprüche 1 bis 5 befindet.

7. Übungseinheit (1) nach Anspruch 6, die des Weiteren eine Leitung (16) aufweist, um Rauchgase aus dem Übungsraum (10) zu entfernen, die erzeugt werden, wenn der Brandsimulator (20) während des Betriebs der Übungseinheit (1) einen Brand stattfinden lässt.

8. Übungseinheit (1) nach Anspruch 7, die des Weiteren eine abgesenkte Decke (15) aufweist, die sich über dem Brandsimulator (20) befindet, wobei die Rauchgas-Ableitung (16) über dieser abgesenkten Decke (16) angeordnet ist.

9. Übungseinheit (1) nach Anspruch 7 oder 8, die des Weiteren einen Nachbrenner (18) aufweist, um abgeleitete Rauchgase zu reinigen, der sich in der Rauchgas-Ableitung (16) befindet.

10. Übungseinheit (1) nach einem der Ansprüche 6 bis 9, die des Weiteren Mittel (17) zur Zwangsentfernung von Rauchgasen aus dem Übungsraum (10) aufweist.

11. Übungseinheit (1) nach einem der Ansprüche 6 bis 10, die als mobile Einheit realisiert ist, und die in einem geeigneten Transportmittel aufgebaut sein kann.

## Revendications

1. Simulateur d'incendie (20) destiné à être utilisé pendant des entraînements dans le cadre de la lutte contre les incendies, **caractérisé par** un panier (30) qui est destiné à recevoir une substance solide combustible, et un brûleur (40) qui est positionné sous le panier (30), dans lequel le panier (30) comprend un système d'extinction d'incendie intégré (50) pour transporter un agent d'extinction d'incendie, dans lequel le système d'extinction d'incendie (50) comprend des ouvertures (51) permettant de faire sortir de l'agent d'extinction d'incendie dans le panier (30).

2. Simulateur d'incendie (20) selon la revendication 1, dans lequel le système d'extinction d'incendie (50) est logé dans un cadre (36) du panier (30).

3. Simulateur d'incendie (20) selon la revendication 2, dans lequel le cadre (36) du panier (30) comprend un nombre de tubes creux (37) qui sont pourvus d'ouvertures (51) sur leur longueur.

4. Simulateur d'incendie (20) selon l'une quelconque des revendications 1 à 3, dans lequel le système d'extinction d'incendie (50) comprend un tuyau (52) qui est situé en une partie substantiellement centrale dans le panier (30), et qui comporte des ouvertures (51) permettant de faire sortir de l'agent d'extinction d'incendie, au moins dans une partie supérieure.

5. Simulateur d'incendie (20) selon l'une quelconque des revendications 1 à 4, dans lequel le panier (30) est divisé en compartiments au moyen de cloisons (38).

6. Unité d'entraînement (1) destinée à être utilisée pendant des entraînements dans le cadre de la lutte contre les incendies, comprenant une salle d'entraînement (10) accessible à une personne au moins, dans laquelle est placé un simulateur d'incendie (20) selon l'une quelconque des revendications 1 à 5.

7. Unité d'entraînement (1) selon la revendication 6, comprenant en outre un conduit (16) pour évacuer de la salle d'entraînement (10) les gaz de combustion qui sont produits quand le simulateur d'incendie (20) laisse se produire un incendie pendant le fonctionnement de l'unité d'entraînement (1).

8. Unité d'entraînement (1) selon la revendication 7, comprenant en outre un plafond abaissé (15) qui est situé au-dessus du simulateur d'incendie (20), dans lequel le conduit d'évacuation des gaz de combustion (16) est situé au-dessus de ce plafond abaissé (15).

9. Unité d'entraînement (1) selon la revendication 7 ou 8, comprenant en outre une unité de postcombustion (18) pour purifier les gaz de combustion évacués, qui est située dans le conduit d'évacuation des gaz de combustion (16).

10. Unité d'entraînement (1) selon l'une quelconque des revendications 6 à 9, comprenant en outre un moyen (17) permettant l'extraction forcée des gaz de combustion provenant de la salle d'entraînement (10).

11. Unité d'entraînement (1) selon l'une quelconque des revendications 6 à 10, qui est réalisée en tant qu'unité mobile, et qui peut être construite dans un moyen de transport approprié.
